# EUROPEAN PATENT APPLICATION

(11) **EP 2 463 225 A1**
(43) Date of publication of application: **13.06.2012**
(21) Application number: 10194539.2
(22) Date of filing: 10.12.2010
(51) Int. Cl.: B66C 23/44, B60P 1/54

(54) **Assembly comprising a vehicle and a lifting device**

(71) Applicant: Derkina Beheer BV, 2451 VR Leimuiden (NL)
(72) Inventor: Brambach, Johan Arie, 2451 VR Leimuiden (NL)
(74) Representative: De Vries & Metman

(57) **Abstract**

An assembly (1) is disclosed, comprising a vehicle (3) and a lifting device (5). The vehicle has a space (7) for carrying goods. The lifting device is attached to the vehicle and comprises a motor (9) and an arm (11) having a support portion (13). The arm is operably coupled with the motor and is rotatable about a first axis of rotation (A1). The first axis of rotation extends in a horizontal or inclined direction with respect to the normal operative orientation of the vehicle such that by a rotation about the first axis of rotation the support portion is movable along a trajectory having both a vertical and a horizontal component with respect to the normal operative orientation of the vehicle.

## Description

### TECHNICAL FIELD

The present disclosure relates to stowing, transporting and hoisting various goods into and out of vehicles.

### BACKGROUND

Personal mobility vehicles such as electrical scooters, wheel chairs and the like e.g. for disabled people are used by increasing numbers of people to assist them in various situations in daily life. This includes at locations away from home. Manufacturers have therefore designed personal mobility vehicles that are foldable so that they are transportable in the cargo area of an SUV or even of a regular car.

However, the weight of such personal mobility vehicles is prohibitive for such storing and transporting the personal mobility vehicle for most people, disabled or not. As a consequence, freedom of movement of people requiring such personal mobility vehicles is more restricted than necessary.

Several inventors have addressed this problem and have come up with various lifts and cranes:
US 7,717,663 discloses a powered lift mechanism for stowing and deploying a scooter relative to the cargo area of a conventional SUV. The lift mechanism comprises an L-shaped box-section boom which is pivotally attached to the D-pillar on the inside of the SUV cargo area so as to leave the floor of the cargo area available. A powered linear actuator controls the angle of the boom relative to the D-pillar mounting structure to raise and lower the loaded scooter. The entire lift mechanism swings in the vehicle and permits the lift gate to be fully closed with both the lift mechanism and the scooter stored within the SUV.

Such lift mechanism is unsuitable for use in the trunk of a sedan or other conventional car. Attachment of the lift mechanism to the D-pillar of the car requires modification of the car and restricts use with another vehicle. Further, the lift mechanism obstructs a drivers view.

US 2009/0152227 discloses a foldable crane as a recoverably installable vehicle lifting hoist. The crane folds to a small package which does not obstruct a drivers view. However, the crane should be mounted to the outside of the vehicle, which may interfere with opening the boot of the vehicle, which increases the bulk of the vehicle and which may facilitate damage to the crane and/or the vehicle. It also disfigures the vehicle.

Further, US 5,090,580 and US 7,070,059 disclose portable cranes for scooters that are mountable in the trunk of a car. However, these cranes require assembly and disassembly for their use which is complex and burdensome and which may pose risks when done inexperienced.

US 2007/0122260 and US 6,547,507 disclose cranes for lifting a scooter in a minivan. The shown cranes are quite bulky and although they may be dismounted from the vehicle, when mounted they significantly obstruct the drivers vision. These cranes further are incompatible with different type cars than a minivan or SUV.

Therefore, a desire for an improved vehicle lift remains.

### SUMMARY

Herewith an assembly is provided comprising a vehicle and a lifting device. The vehicle has a space for carrying goods such as a cargo space or a trunk. The lifting device is attached to the vehicle and comprises a motor and an arm having a support portion. The arm is operably coupled with the motor and is rotatable about a first axis of rotation. The first axis of rotation extends in a horizontal or inclined direction with respect to the normal operative orientation of the vehicle such that by a rotation about the first axis of rotation the support portion is movable along a trajectory having both a vertical and a horizontal component with respect to the normal operative orientation of the vehicle.

Thus, by one rotation the support portion is arrangeable inside and/or out of the cargo space of the vehicle and a load supported by the support portion can be lifted and transported into or out of the cargo space by rotation of the arm by the motor. The support portion may comprise a platform for carrying a load and/or an eye, a hook, a shackle, etc. or another device for supporting a suspended load. The more horizontal the first axis is oriented, the more the rotation of the arm is in a vertical plane, and as a consequence the more lifting action and height may be provided for an arm of a given length. Thus, a load supported by the arm may also be lifted over a threshold. The load may be any object or any number of goods. Advantageously, the assembly is configured to hoist a personal mobility vehicle such as an electrical scooter into a regular car.

It should be noted that within the present text, unless clearly otherwise specified, the word "orientation" refers to the relation between the object or portion discussed and a general exterior reference system, in particular a normal world frame with gravity pointing along a vertical axis, whereas the words "position" and "direction" relate to reference systems associated with (one or more portions of) the assembly, possibly moving with respect to another reference system.

In an embodiment, the arm comprises a mast portion and a boom portion wherein the mast portion has a first direction of extension and wherein the boom portion comprises the support portion and extends from the mast portion in a second direction of extension extending in a generally radial direction with respect to the first direction of extension. This may reduce obstruction of the trajectory of the load by the arm, in particular in the case of a suspended load. The mast and boom portions may be separately attached to each other and/or be an integrated or unitary object to form a generally curved or bent L- or C-shaped structure.

At least the support portion of the arm may be rotatable about a second axis of rotation extending at an angle to the first axis of rotation. This facilitates orienting the support portion, e.g. to facilitate maintaining the load in a particular orientation. In an embodiment with a boom portion, the boom portion may be rotatable about the second axis of rotation, the support portion rotating with a radius at least partially determined by the boom portion.

The first and second axes of rotation may be substantially perpendicular to each other to provide a large freedom of movement for the support portion. The rotational degree of freedom about the first and/or second axis of rotation may span any desired angular range up to and including a full revolution over 360 degrees. Alternatively, the angular range may be restricted to a predetermined range, e.g. for protecting portions of the assembly, a load, other equipment and/or people. In an embodiment, the angular range may be adjustable, e.g. with stops.

At least the support portion of the arm may be substantially freely rotatable about the second axis of rotation, obviating a motor and/or driving arrangement for a rotation about the second axis of rotation. Further, it has been found that this may facilitate movement of the load during rotation about the first action and therewith facilitates transport of the load, in particular in an embodiment having a boom portion which is rotatable about the second axis of rotation.

If the second axis of rotation coincides substantially with the first direction of extension of the mast portion, a robust construction of the arm is facilitated and intuitive use of the arm is facilitated. This may increase user safety.

The arm may comprise a first portion extending generally in a radial direction with respect to the first axis of rotation and a second portion extending generally in a tangential direction with respect to the first axis of rotation, so that the arm, when seen in along the first axis of rotation, is curved or bent rather than being straight in radial direction. This allows to arrange a portion of the arm parallel to one plane at two different heights from that plane, in particular a floor of the vehicle, whereas the axis of rotation may be arranged offset from that plan, e.g. being at a distance from the floor of the vehicle. This facilitates lifting the support portion over an object, e.g. a threshold of a trunk of the vehicle.

In a particularly efficient embodiment, the second axis of rotation is arranged radially offset from the first axis of rotation. This allows a large motional degree of freedom for the supporting portion.

At least a portion of the arm, advantageously the entire arm, may be removably attached to the motor. This allows removing the arm when not needed e.g. freeing storage volume in the vehicle. Further, the arm may exchangeable for another arm with a different shape and/or with different properties.

The lifting device may be removably attached to the vehicle, preferably by clamping, so that the entire device may be removed for maintenance, repair or simply when not needed. When attached by clamping the vehicle need not be modified permanently, facilitating use, reducing costs for providing a claimed assembly and e.g. maintaining second-hand value of the vehicle.

At least a portion of the lifting device, advantageously the entire lifting device may be movably attached to the vehicle. This allows to adjust the position of the lifting device to a desired (or intended) position with respect to the vehicle and/or goods to be (un-) loaded.

The lifting device may be used with and be attached in any type of car, in particular the vehicle being a car having a trunk and the lifting device being mounted in the trunk.

A lifting device as defined herein may be sold as a separate object for manufacturing an assembly as claimed. Such lifting device may comprise a mount for removably attaching the lifting device in the cargo volume of the vehicle, preferably by clamping.

An existing vehicle may be modified into a claimed assembly by retrofitting the vehicle with a lifting device as defined herein.

### BRIEF DESCRIPTION OF THE DRAWINGS

The above-described aspects will hereafter be more explained with further details and benefits with reference to the drawings showing an embodiment of the invention by way of example.
Fig. 1 is a perspective view of a car trunk and a lifting device fitted in the car trunk;
Fig. 2 is a schematic side view of a car trunk and a lifting device;
Fig. 3 is a perspective view of a car and a lifting device with concealed motor;
Fig. 4 is a perspective view of a truck having two movable lifting devices
Fig. 4a is a detail of an assembly as in Fig. 4.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral.

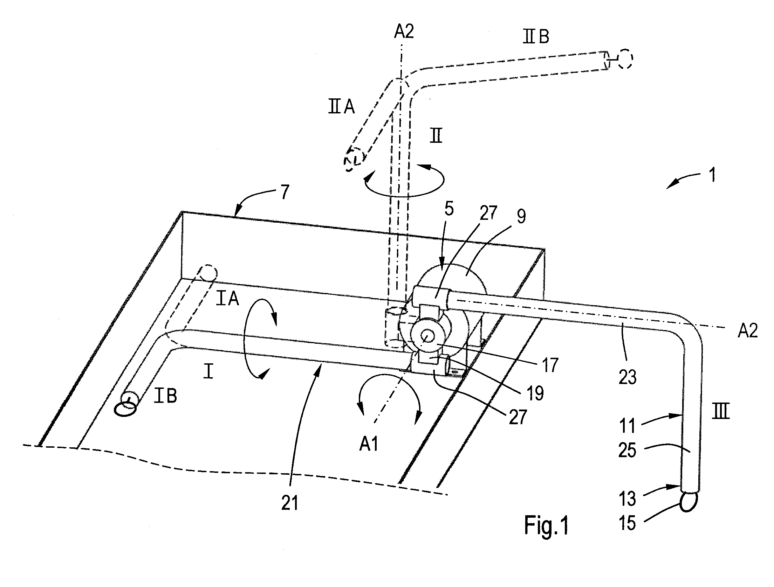

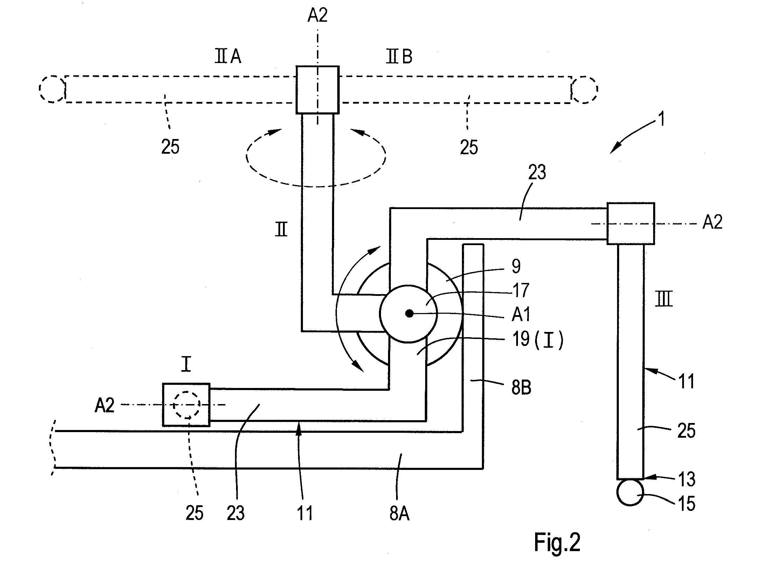

Fig. 1 shows an assembly 1 comprising a vehicle 3 and a lifting device 5. The vehicle 3 is a car and has a cargo space 7 defined by a trunk having a floor 8A and a rear wall 8B, which may be closed off with a lid. The lifting device 5 is attached to the vehicle 3 and comprises a motor 9 and an arm 11 having a support portion 13. Here, the support portion 13 comprises an eye 15, but a hook, a (snap-) shackle etc are also conceivable. The motor 9 has a rotary spindle 17. The arm 11 is operably coupled with the motor 9 by being attached to the spindle 17 and is therewith rotatable about a first axis of rotation A1. In the shown embodiment, the first axis of rotation A1 extends in a horizontal direction with respect to the normal operative orientation of the vehicle 3, as on a street, in a parking space etc., and substantially perpendicular to the direction of (un-) loading. In the case shown here, that direction of (un-) loading coincides with the normal forward driving direction of the car and the first axis of rotation extends parallel to the floor 8A the rear wall 8B of the trunk 7. As will be explained in more detail below, by a rotation about the first axis of rotation A1 the arm 11 is movable in an arc about the first axis of rotation A1. By such rotation, the support portion 13 is movable along a trajectory having both a vertical and a horizontal component with respect to the normal operative orientation of the vehicle. In Figs. 1 and 2 different rotary positions of the arm 11 are shown and indicated with roman numerals I-IIA/IIB-III, corresponding to different stages in an action to (un-)load an object from the cargo volume, as will be explained in more detail later.

In the embodiment of Fig. 1, the arm 11 comprises a first portion 19, or offset stub, extending from the spindle 17 generally in a radial direction with respect to the first axis of rotation A1 and a second portion 21 which here comprises a mast portion 23 and a boom portion 25 comprising the support portion 13. The mast portion 23 extends in a first direction of extension which here is substantially perpendicular to the offset stub 19 and substantially perpendicular to the first axis of rotation A1, thus extending generally in a tangential direction with respect to the first axis of rotation A1. The boom portion 25 extends from the mast portion 23 in a second direction of extension, which is in a generally radial direction with respect to the first direction of extension of the mast portion 23.

Fig. 2 shows an assembly substantially similar to that of Fig. 1 in side view.

In the embodiment of Fig. 1, the mast and boom portions 23, 25 are formed as a unitary second arm portion 21 in a generally curved L-shaped structure. The second arm portion 21 is rotatably coupled to the offset stub 19 with a rotary joint 27, so that the second arm portion 21 is rotatable about a second axis of rotation A2 extending at an angle to the first axis of rotation A1. Here the second axis of rotation A2 coincides with the direction of extension of the mast portion 23, being offset from, and perpendicular to, the first axis of rotation A1. The boom portion 25 and therefore the support portion 13 may rotate out the second axis of rotation.

In the embodiment of Fig. 2, the mast and boom portions 23, 25 are formed as separate joined objects to form a second arm portion 21 in a generally right-angled L-shaped structure. The mast and boom portions 23, 25 are joined with a rotary joint 29 near the free end of the mast portion 23 so that the boom portion 25, and therefore the support portion 13, is rotatable with respect to the mast portion 23 about a second axis of rotation A2 extending at an angle to the first axis of rotation A1. Also here the second axis of rotation A2 coincides with the direction of extension of the mast portion 23, being offset from and perpendicular to the first axis of rotation A1.

Further, the support portion 13 is optionally rotatable with respect to the boom portion 25, whereby the rotation may be about a attached axis extending substantially parallel or perpendicular to the direction of extension of the boom portion 25. A ball joint as suggested by Fig. 1 is also conceivable. The support portion 13 may alternatively be generally attached with respect to the arm 11.

The (motor 9 of the) lifting device 5 may attached permanently to the vehicle 3, e.g. by welding or riveting, preferably it is bolted or otherwise attached semi-permanently to the vehicle 3, but more preferred is attaching it non-permanent such as by releasably fastening to fastening means of the vehicle e.g. bolting to one or more mounting means with releasable bolts preferably hand-releasable like wingnuts, and most preferred is clamping. E.g., the motor may be provided with a rack, e.g. a grid-shaped rack (not shown) with several mutually parallel and perpendicular expandable struts (e.g. with screw threads) which may be expanded to fit and attach the rack against opposite walls of the trunk of a car. Such clamping racks may have a general #-shape and such racks are for instance known for attaching luggage racks, temporary and/or elevated floors and/or dog gratings in a car. This facilitates (un-) mounting the device 5 from the vehicle.

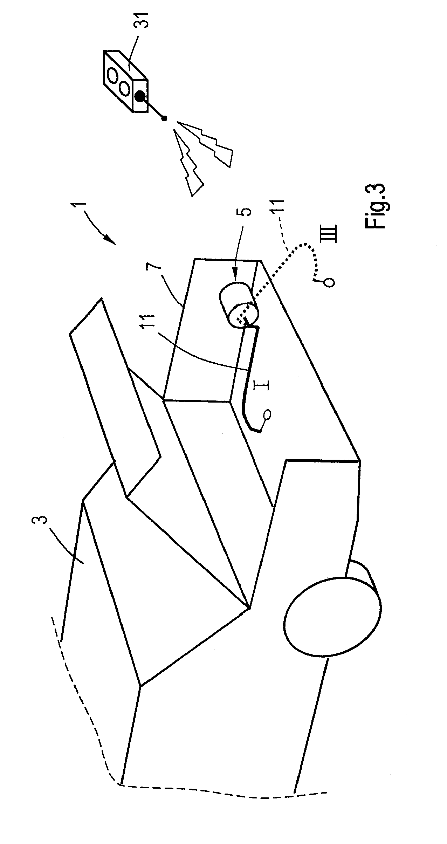

It is also conceivable that the vehicle 3 is provided with a rotary pivot 17 extending into the cargo volume for operating an arm 11 but with the motor hidden from view, e.g. mounted in a rear wing portion of the vehicle 3, as indicated in Fig. 3. In another variant, the motor may be mounted on an outside or underside of the vehicle. The motor may be operably coupled with the arm by any suitable transmission, including a chain and sprocket transmission.

The principle of operation of the assembly will now be explained. In transport of the vehicle 3, the lifting device 5 is normally in a situation wherein the arm 11 is stored in an unobtrusive position, e.g. close to or against the trunk floor 8A; this position is indicated with roman numeral I. The shown optional offset stub 19 is then also parallel to the rear wall 8B of the trunk. In this position, the lifting device does not obstruct the normal view of a driver of the vehicle to the traffic. The motor 9 and/or the arm 11 may be formed to closely follow the contours of the cargo volume so as to require and/or occupy minimum space of the cargo volume.

As indicated in Fig. 1, due to the rotational degree of freedom of the arm 11 about the second axis of rotation A2 the boom portion 23 of the arm 11 may point in different orientations; e.g. lying down (positions IA and IB), pointing upward (e.g. against a side wall), or being attached to an object or a load, etc.

Upon operation of the motor 9, the rotary spindle 17 is rotated and the arm 11 is rotated about the first axis of rotation A1 as far as desired. The maximum available angle of rotation is determined by the geometry of the assembly, in particular the shape of the arm in relation to the direction and position of the first axis of rotation and the shape of the cargo volume. In Figs. 1 and 2, the maximum angle of rotation is approximately 180 degrees from position I via position II to position III. In position III, due to the offset stub 19 and the first axis of rotation A1 being just higher up from the trunk floor 8A than half the height of the trunk rear wall 8B, the mast portion 23 may be arranged substantially parallel to the trunk floor 8A in both positions I and III. In position III, the radially far end of the mast portion 23 with respect to the first axis of rotation A1 protrudes from (the perimeter of) the cargo space.

Due to the rotation of the arm 11 about the first axis of rotation A1, the orientation of the second axis of rotation A2 varies. If the second axis of rotation A2 is vertical (position II), the boom portion 25 may rotate in a horizontal plane, e.g. between positions IIA and IIB. This may amount to a substantially horizontal translation of the support portion 13 out of the cargo space without requiring a further lifting force.

In other words, a first imaginary plane is spanned by the first axis of rotation A1 and the support portion 13. The arm 11 is rotatable about at least the first axis of rotation A1 over an angle of rotation such that the first imaginary plane is rotatable from one inclined or horizontal orientation (e.g. position I) through a vertical orientation (e.g. in between positions IIA and IIB) to another inclined or horizontal orientation (e.g. position III). By that, the support portion 13 (with an optional attached load) is raised up and lowered from a highest position over ground and translated with respect to ground. In case the arm is rotatable about the second axis of rotation A2 or the first axis of rotation A1 has an inclined orientation, the horizontal component of the translation with respect to ground has a curved shape.

In the position III a boom portion 25 may point downward so that the arm 11 reaches over the threshold of the rear trunk wall 8B toward the ground. In this position a load may be attached to or detached from the support portion 13 without requiring to lift the load off the ground. A winch, cable reel, hoisting chain, or other movable lifting system may be obviated, but it may be provided if so desired. In the embodiment of Fig. 3 the arm is substantially rigid (only rotation about the first axis of rotation and no second or further axis of rotation), but still a load may be lifted and transported into and out of the vehicle easily.

It has been found with a prototype according to Fig. 1, that in case the support portion 13 or the boom portion 25 is freely rotatable about the second axis of rotation A2, the weight of a suspended load causes a rotation of the boom portion 25 so that the combined rotation about both axes A1 and A2 results in a natural lifting and sideways translational motion of the load around the mast portion 21, over a possible threshold 8B and to the into and out of a cargo volume. Any rotation about the second axis of rotation depends on the shape and orientation of the arm 11, as well as possibly on the weight and weight distribution of the load.

Furthermore, When attached to the support portion 13, the load is secured in the cargo volume during transport.

With a prototype according to Fig. 1, a small electromotor powered by the onboard 12V electrical system of a regular family sedan car could gently put an electric scooter with or without lead-acid batteries on the ground and/or into the trunk 7 of the car. If need be, gears and/or transmissions may be provided between the motor and the arm.

The motor may be operated various ways, e.g. in an on-off mode, or with an adjustable speed and/or with an auto-turn-off arrangement to restrict the angle of rotation about the first axis of rotation A1. Any control devices may comprise one or more built in devices, separate devices connectable or connected with wires, key-operated devices and/or remote control devices indicated with 31 in Fig. 3.

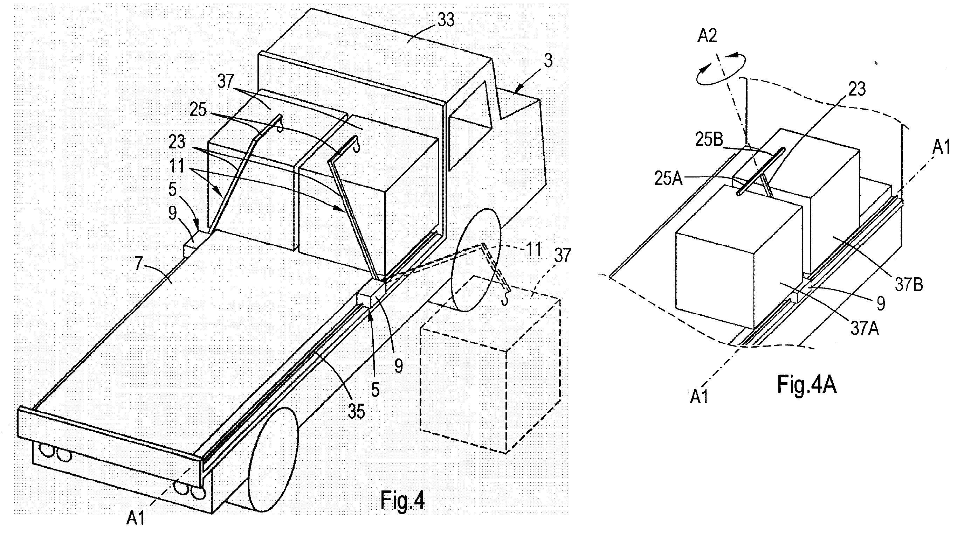

Yet a further embodiment is shown in Fig. 4. Here, the vehicle 3 is a truck, which may be a pick-up truck, having a cargo hold 7 and a cabin 33. The assembly comprises two lifting devices 5, one on each side of the cargo hold, each with the motor 9 of the lifting device 5 being arranged on an outside of the cargo hold 7. In each of the lifting devices 5, the first axis of rotation A1 is oriented substantially horizontal and parallel the normal driving direction of the vehicle 3. The arms 11 have a mast portion 23 and a boom portion 25 that is freely rotatable about the mast portion 23. In the shown embodiment the arms 11 lack an offset stub portion. By a rotation of the arm 11 about the first axis of rotation A1 and possibly a rotation of the boom 25, a load 37 may be placed into the cargo hold 7 or outside thereof, e.g. on a pavement (indicated in phantom).

In the shown embodiment, a portion of one or both the lifting devices 5 is movably attached to the vehicle 3. Here, the motor 9 is mounted to a rail 35 extending along a portion of the vehicle 3. The position of (the motor 9 of) the lifting device 5 with respect to the vehicle 3 is adjustable to improve flexibility with respect to the positioning the vehicle 3 and the load 37 when (un-) loading.

The angle of free rotation of the boom portion 25 may be restricted to an angular range of about 180 degrees towards the rear of the vehicle 3, with the complementary angle of rotation of about 180 degrees forward being blocked so that the boom portion 25 and a suspended load are prevented from hitting the cabin 33. Here, the plane of rotation of the mast portion is oriented substantially vertical and perpendicular to the cargo hold 7 and the angle of free rotation of the boom portion 25 is not restricted. Thus, as indicated in Fig. 4A, in one position of the motor 9 and the arm 23, by simple rotation of the boom 25 about the second axis of rotation A2 into a first position 25A or a second position 25B, two loads 37A and 37B, one on either side of (the plane of rotation of) the mast portion 23, may be (un-) loaded independently without having to move the lifting device. Thus, for (un-) loading two different adjacent loads into / from the space 7 for carrying goods, a movable lifting device is not needed.

One or more positions of the lifting device 5 may be defined to particular places corresponding to the size of loads in substantially standardised sizes such as standardised containers or "big bags" of about 1 cubic meter for sand, pebbles etc. Thus, a number of such loads may be neatly stored adjacent each other, saving storage space.

Although depending on the arrangement such position may be adjustable by hand, e.g. by sliding and/or wheeling the lifting device along the rail 35, it is considered advantageous if the position of (the motor 9 of) the lifting device 5 with respect to the vehicle 3 is adjustable by some driving means, e.g. a toothed rack, a chain drive, a worm gear, etc. A rail 35 may comprise a single rail, and may comprise a solid and/or a hollow rail portion. Alternatively, a plurality of rail portions may be provided, e.g. with the lifting motor 9 travelling along two or more parallel rails of which one may comprise a driving means. In another embodiment (not shown), the motor 9 may be attached, with the pivot 17 extending along the vehicle 3 and with the arm 11 being movably attached to the pivot 17. This obviates having to move the motor 9 and possible connections, e.g. power cables, control wiring, etc. The lifting device 5 may be movable along the vehicle 3 substantially freely or be movable only in discrete steps between a plurality of predetermined positions. The range of freedom of motion of the lifting device with respect to the vehicle may comprise a rotation, in particular a rotation in a plane substantially horizontal with respect to the normal operative orientation of the vehicle, such as allowing a change of the first axis op rotation A1 between substantially parallel and substantially perpendicular to the normal driving direction of the vehicle.

The invention is not restricted to the above described embodiments which can be varied in a number of ways within the scope of the appended claims. For instance the rotary spindle 17 and the arm 11 may comprise a non-rotationally symmetric shape like triangular, rectangular, square, hexagonal, star-shaped, etc. and/or one or more interengaging slots or keyways, so that the arm 11 may be detached from the spindle 17 whereas the arm, once attached, is still drivable by the motor. Also or alternatively, the arm may comprise one or more foldable and/or detachable sections, e.g. separable mast and boom portions, which may be separable at one or more rotary joints 27, 29, allowing to stow away the device in a small volume when not in use.

The arm 11 may have a different shape (e.g. having longer or shorter portions) and/or may have any suitable cross sectional shape, like round, rectangular, square, solid, hollow as in a tube etc.

The vehicle may have a different form than a sedan, e.g. being a station wagon, a minivan, a Sports Utility Vehicle (SUV) or a pick-up truck.

The motor may have a different form. The motor may be an electromotor, but the arm may also be powered by the regular vehicle motor, obviating an additional motor.

The vehicle may comprise more than one lifting assembly. Also, the vehicle may comprise more than one motor and/or a coupling means for operably coupling a motor to an arm. Thus, at various places in the vehicle a lifting device as described herein may be realised by mounting an arm to such motor or coupling means. Also, one or more extension pieces may be attached to the arm inbetween the motor and a mast portion, e.g. as an extension of the rotary spindle 17, such that a mast portion is rotatable about the first axis of rotation remote from the motor being separated from the motor by the extension piece(s). Such embodiments increase flexibility of the assembly.

An arm with a mast and a boom portion may comprise a further mast portion similar to the first mast portion but on an opposite side of the boom portion so that the arm is formed as a generally U-shaped brace. The far end of the further mast portion may have tip resting on a surface or a hinge having an axis of rotation coinciding with the first axis of rotation, or possibly also be attached to the motor to be driven together with the arm. In such embodiment, a rotation about the second axis may be blocked if a portion of the further mast portion is attached, but the lifting device may more easily and reliably lift heavier and/or elongated objects than with an arm having a free end.

Elements and aspects discussed for or in relation with a particular embodiment may be suitably combined with elements and aspects of other embodiments, unless explicitly stated otherwise.

## Claims

1. An assembly (1) comprising
a vehicle (3) and a lifting device (5),
wherein the vehicle has a space (7) for carrying goods ,
wherein the lifting device is attached to the vehicle and comprises a motor (9) and an arm (11) having a support portion (13),
wherein the arm is operably coupled with the motor and is rotatable about a first axis of rotation (A1),
**characterised in that**
the first axis of rotation extends in a horizontal or inclined direction with respect to the normal operative orientation of the vehicle such that by a rotation about the first axis of rotation the support portion is movable along a trajectory having both a vertical and a horizontal component with respect to the normal operative orientation of the vehicle.

2. The assembly (1) of claim 1, wherein the arm (11) comprises a mast portion (23) and a boom portion (25),
wherein the mast portion has a first direction of extension and
wherein boom portion comprises the supporting portion (13) and extends from the mast portion in a second direction of extension extending in a generally radial direction with respect to the first direction of extension.

3. The assembly (1) of any preceding claim, wherein at least the support portion (13) of the arm (11) is rotatable about a second axis of rotation (A2) extending at an angle to the first axis of rotation (A1).

4. The assembly (1) of claim 3, wherein the first axis of rotation (A1) and the second axis of rotation (A2) are substantially perpendicular to each other.

5. The assembly (1) of any one of claims 3-4, wherein at least the support portion (13) is substantially freely rotatable about the second axis of rotation (A2).

6. The assembly (1) of claim 2 and any one of claims 3-5, wherein the second axis of rotation (A2) coincides substantially with the first direction of extension of the mast portion (23).

7. The assembly (1) of any preceding claim, wherein the arm (11) comprises a first portion (19) extending generally in a radial direction with respect to the first axis of rotation (A1) and a second portion (21) extending generally in a tangential direction with respect to the first axis of rotation.

8. The assembly (1) of any one of claims 2-7, wherein the second axis of rotation (A2) is arranged radially offset from the first axis of rotation (A1).

9. The assembly (1) of any preceding claim, wherein at least a portion of the arm (11) is removably attached to the motor.

10. The assembly (1) of any preceding claim, wherein the lifting device (5) is removably attached to the vehicle (3), preferably by clamping.

11. The assembly (1) of any preceding claim, wherein at least a portion (9; 11) of the lifting device (5) is movably attached to the vehicle (3).

12. The assembly (1) of any preceding claim, wherein the vehicle (3) is a car having a trunk (7) and the lifting device (5) is mounted in the trunk.

13. Lifting device (5) for an assembly (1) of any preceding claim, wherein the lifting device (5) comprises a motor (9) and an arm (11) as specified in any one of claims 1-9.

14. Lifting device (5) of claim 13, comprising a mount for removably attaching the lifting device in the cargo volume (7) of the vehicle (3), preferably by clamping.

15. Method of modifying a vehicle (3) comprising the step of providing the vehicle with a lifting device (5) comprising a motor (9) and an arm (11) thus forming an assembly according to any one of claims 1-12.
